Europäisches Patentamt

European Patent Office

Office européen des brevets

(19)

(11) Veröffentlichungsnummer: **0 332 202 B1**

(12) **EUROPÄISCHE PATENTSCHRIFT**

(45) Veröffentlichungstag der Patentschrift:
**04.12.91 Patentblatt 91/49**

(21) Anmeldenummer: **89104235.0**

(22) Anmeldetag: **10.03.89**

(51) Int. Cl.⁵: **B61D 17/22, B60D 5/00,
B62D 47/02, B62D 47/00**

(54) **Faltenbalgverschluss.**

(30) Priorität: **11.03.88 DE 3808231**

(43) Veröffentlichungstag der Anmeldung:
**13.09.89 Patentblatt 89/37**

(45) Bekanntmachung des Hinweises auf die
Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**DE-A- 3 225 031
GB-A- 1 228 200**

(73) Patentinhaber: **HÜBNER Gummi- und
Kunststoff GmbH
Agathofstrasse 15
W-3500 Kassel-Bettenhausen 1 (DE)**

(72) Erfinder: **Koch, Robert
Schlesierstrasse 2
W-3437 Bad Sooden-Allendorf (DE)**

(74) Vertreter: **Walter, Helmut, Dipl.-Ing.
Aubinger Strasse 81
W-8000 München 60 (DE)**

**Beschreibung**

Die Erfindung bezieht sich auf einen Faltenbalgverschluß gemäß dem Gattungsbegriff des Patentanspruches 1.

Faltenbälge der hier in Rede stehenden Art sind zwischen zwei miteinander gelenkig gekuppelten, dem Personentransport dienenden Schienen- oder Straßenfahrzeugen aufgehängt und umgeben röhrenförmig eine Übergangsbrücke, um es Personen zu ermöglichen, über die Übergangsbrücke vom einen zum anderen Fahrzeug überzuwechseln, ohne Umgebungseinflüssen wie Wind, Regen und Schnee ausgesetzt zu sein. Bei den Faltenbälgen handelt es sich im allgemeinen um eine im Querschnitt rechteckige Röhre, deren vier Seitenwände aus einem beschichteten Gewebe bestehen, das mit witterungsbeständigem Material beschichtet und in eine Vielzahl von Falten gelegt ist, die um den gesamten Balg in dessen Umfangsrichtung verlaufen. Jeder Faltenbalg ist an beiden Enden mit einem Rahmen versehen, der der Kontur des Balgumfanges folgt und von denen einer dazu bestimmt ist, am einen der beiden miteinander gekuppelten Fahrzeuge befestigt zu werden, während der andere dazu bestimmt ist, am anderen der beiden Fahrzeuge festgelegt oder mit dem entsprechenden Rahmen eines zweiten Faltenbalges des zweiten Fahrzeuges festgelegt zu werden, wenn der Übergangsschutz zwischen den beiden Fahrzeugen aus zwei aufeinander folgenden Röhrenabschnitten gebildet wird.

Um den Faltenbalg über die Übergangsbrücke und gegebenenfalls die darunterliegende Mittelpufferkupplung hinweg einbauen zu können, ist der Faltenbalgboden in Längsrichtung der vom Faltenbalg gebildeten Röhre geteilt, wobeinach dem Einbau die beiden Balgränder lösbar miteinander verbunden werden müssen. Hierzu sind bereits eine Reihe von Möglichkeiten bekannt.

Bei einem bekannten Balgverschluß sind dem einen der einander überdeckenden Randbereiche Ösen und dem anderen dieser beiden Randbereiche auf Lücken zu den Ösen befindliche, zu der dem Rand abgekehrten Seite hin offene Haken zugeordnet und ein Spannkabel ist zickzackförmig abwechselnd durch einen Haken und eine Öse geführt, so daß das Spannkabel Haken und Ösen und damit die beiden Randbereiche gegeneinander zieht und relativ zueinander festlegt (GB-A-1228200). Bei einem anderen bekannten Balgverschluß ragt der eine Randbereich zungenförmig in den taschenförmigen anderen Randbereich, beide Randbereiche sind mit einer Reihe durchgehender Löcher versehen und die Löcher beider Randbereiche überdecken einander, wenn der zungenförmige Randbereich in den taschenförmigen Randbereich eingeführt ist, so daß Verbindungszapfen durch je zwei achsgleiche Löcher des taschenförmigen und ein mit diesen Löchern achsgleiches Loch des zungenförmigen Randbereichs gesteckt werden und so die beiden Randbereiche gegeneinander festlegen und den Balg schließen können (DE-A-3225031). Wenn mit der Erfindung trotzdem eine weitere Lösung vorgeschlagen wird, so angesichts der Aufgabe, daß ein besonders einfacher, kostengünstiger und trotzdem über lange Zeit betriebssicherer Verschluß vorgeschlagen werden soll.

Der Lösung dieser Aufgabe dienen die Merkmale der Patentansprüche.

Die erfindungsgemäße Lösung hat den Vorteil gleicher Randausbildung, wobei zwei gleiche Randbereiche lediglich in Längsrichtung der Teilung so weit gegeneinander versetzt dem Balg zuzuordnen sind, daß die Haken eines Randbereiches den Fenstern des anderen Randbereiches gegenüberliegen. Die Randbereiche können beispielsweise als glatte Streifen von einem sehr langen einheitlich gefertigten Band mit Haken und Fenstern abgelängt werden, so daß eine einfache Herstellung und Lagerhaltung möglich ist und andererseits für jeweilig zum Einsatz kommende Streifenlänge den jeweiligen Gegebenheiten angepaßt werden kann.

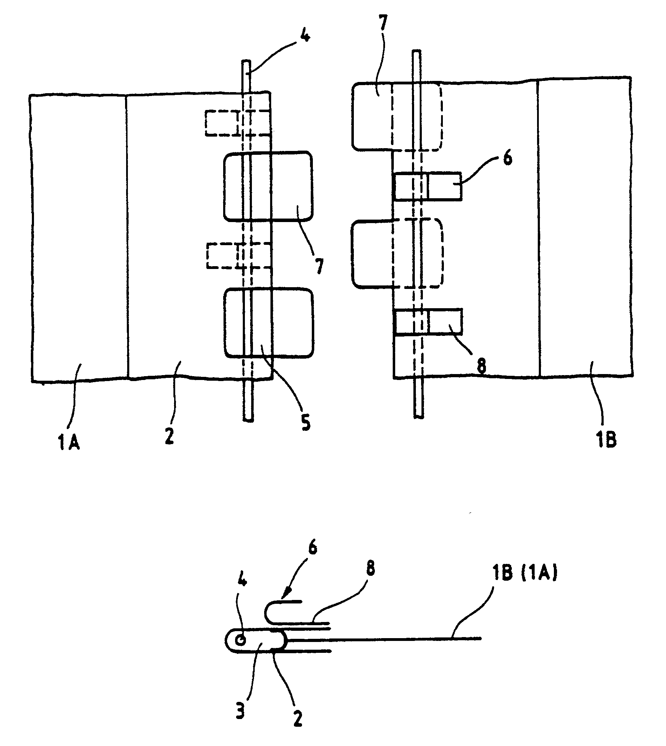

Die Erfindung ist nachfolgend anhand der Zeichnung erläutert.

Jedes der beiden Balgenden 1A, 1B zu beiden Seiten der Teilungslinie des in Balglängsrichtung auf seiner gesamten Länge geteilten Balgbodens ist gedoppelt, indem der Balgboden umgeschlagen ist und der umgeschlagene Randstreifen mit dem davor liegenden Balgmaterial verbunden, beispielsweise vernäht und/oder verklebt ist, oder indem je ein im Querschnitt U-förmiger Streifen 2 auf die beiden Balgenden 1A bzw. 1B aufgesteckt ist und die Schenkel dieses Streifens entsprechend mit dem jeweiligen der Balgenden verbunden sind.

In beiden Fällen besteht vor jedem Balgende ein kanalförmiger Hohlraum 3, in dem ein in Grenzen elastisch nachgiebiges Kabel 4 geführt ist, das mit den Endrahmen an beiden Enden des Balges fest verbunden ist. Die Spannung in jedem Kabel 4 ist so bestimmt, daß die gewollte Länge des Balges nicht verändert ist und die gewollten Längenänderungen nicht beeinträchtigt sind, d.h. die mit Rücksicht auf Fahrbedingungen notwendigen Längenänderungen des Balges in gleicher Weise möglich sind, als wären die Kabel 4 nicht vorhanden.

In einer vorgegebenen Anzahl und mit einer vorgegebenen, vorzugsweise gleichbleibenden Teilung sind im Bereich der Stirnseiten der Streifen 2 bzw. der gedoppelten Balgränder Fenster 5 in das Balgmaterial eingeschnitten, durch die hindurch die kanalförmigen Hohlräume 3 bzw. die Kabel 4 zugänglich sind. Die Fenster 5 in beiden Streifen 2 bzw. den beiden Balgrändern sind um eine halbe Teilung in Längsrichtung der beiden Balgränder gegeneinander versetzt. Jedem Balgrand ist in der Mitte zwischen je zwei Fenstern 5 hinter diesen ein Haken 6, vorzugsweise aus Plastikmaterial, befestigt, beispielsweise angenäht und/ oder angeklebt, dessen Ösenweite angemessen größer als der Kabelquerschnitt ist. Am einen Balgrand sind die Haken auf der Innenseite, am anderen Balgrand auf der Außenseite des Balgbodens befestigt. Gegebenenfalls können an der Stelle offener Haken auch geschlossene Ösen verwendet werden.

Die im wesentlichen rechteckigen Fenster 5 werden im wesentlichen durch Schnitte in das Balgrandmaterial an zwei Schmal- und einer Längsseite erzeugt, so daß Materialflügel 7 mit dem Balgrandmaterial verbunden bleiben, über denen das jeweilige Kabel im Bereich des jeweiligen Fensters verläuft. Zum Schließen des Balges im Bereich des Balgbodens werden die Balgränder 1A und 1B übereinandergeschoben, womit die Haken 6 des jeweils einen Balgrandes 1A bzw. 1B in die Bereiche der Fenster 5 des jeweils anderen Balgrandes 1B bzw. 1A gelangen und über die Flügel 7 des jeweils anderen Balgrandes zu liegen kommen. Die Haken 6 können nun relativ mühelos über die Kabelabschnitte in den Fensterausschnitten geschoben werden und der Faltenbalg ist ohne jede weitere Maßnahme zuverlässig und dauerhaft geschlossen, wobei ein Wiederöffnen in analoger Weise, d.h. ebenfalls wieder ohne große Mühe möglich ist.

Finden an der Stelle der Haken 6 geschlossene Ösen Anwendung, so sind die Kabel 4 zunächst nur am einen Faltenbalgendrahmen einzuhängen, durch die Hohlräume 3 und die Ösen zu ziehen und dann am anderen Endrahmen einzuhängen.

Ersichtlich sind die Randbereiche 1A, 1B glatte Streifen, in die die umlaufenden Falten des Balges in geeigneter Weise einlaufen. Die Haken 6 sind am hinteren Ende mit relativ großflächigen Laschen 8 versehen, mit denen sie auf der Balgwand bzw. dem Boden des Balges aufgeklebt und/oder aufgenäht sein können.

## Patentansprüche

1. Verschluß für einen zum Einbau zwischen zwei gelenkig miteinander verbundenen Fahrzeugen bestimmten, dabei eine Übergangsbrücke zwischen diesen Fahrzeugen als Übergangsschutz umgebenden Faltenbalg, dessen Falten in Umfangsrichtung verlaufen, der im unteren Bereich und in Längsrichtung zwischen zwei Randbereichen (1A, 1B) geteilt ist und dessen Randbereiche zum Zweck des Schliessens des Balges teilweise übereinandergelegt werden und in dieser Stellung unter Verwendung eines Spannkabels (4), das mit haken- und ösenförmigen Mitteln (6) der Randbereiche zusammenwirkt, gehalten werden, **dadurch gekennzeichnet**, daß die beiden Randbereiche (1A, 1B) insofern gleich ausgebildet sind, als jedem von ihnen ein Streifen (2) zugeordnet ist, der einen in Richtung der Teilung verlaufenden Führungskanal (Hohlraum 3) zur Aufnahme je eines am Endrahmen des Faltenbalges befestigten Spannkabels (4) umschließt und über die Länge der Randbereiche abwechselnd aufeinanderfolgend zum Rand hin offene, den Führungskanal unterbrechende Fenster (5) und zu der dem Rand abgekehrten Seite hin offene Haken (6) aufweist, und daß die beiden Randbereiche insofern verschieden ausgebildet sind, als die Streifen mit Haken und Fenstern des einen Randbereiches gegenüber den Streifen mit Haken und Fenstern des anderen Randbereiches so in Längsrichtung der Teilung versetzt sind, daß die Haken des einen Randbereiches den Fenstern des anderen Randbereiches gegenüberliegen und im geschlossenen Zustand des Balges jedes Kabel durch die Fenster des einen und im Bereich jedes Fensters durch einen Haken des anderen Randbereiches geführt ist.

2. Verschluß nach Anspruch 1, **dadurch gekennzeichnet**, daß die Spannkabel (4) an ihren beiden Enden mittels Befestigungsmitteln so an den Endrahmen des Faltenbalges befestigt sind, daß ihre Spannung in der Weise gleich, bestimmt ist, daß die Falten des Balges eine vorbestimmte Kontur und einen vorbestimmten Abstand voneinander haben.

3. Verschluß nach einem der Ansprüche 1 und 2, **dadurch gekennzeichnet**, daß bei Bildung des Führungskanals durch Umschlagen des jeweiligen Randbereichs zur Erzielung eines doppelwandigen Randbereichs die Fenster (5) eine rechteckige Form haben und dadurch gebildet sind, daß der jeweilige Fensterausschnitt auf drei der vier Seiten durch Trennschnitte im Material des jeweiligen Streifens (2) gebildet ist, der so gebildete, an der vierten Seite des Fensterausschnittes am Streifen verbliebene Flügel (7) unter dem Haken (6) des jeweils anderen Balgrandbereiches liegt.

4. Verschluß nach einem der Ansprüche 1 bis 3, **dadurch gekennzeichnet**, daß die Haken Laschen (8) aufweisen, die auf dem Streifenmaterial aufgenäht sind.

5. Verschluß nach einem der Ansprüche 1 bis 4, **dadurch gekennzeichnet**, daß die Streifen als glatte Streifen ausgebildet sind, in die die umlaufenden Falten des Balges einlaufen.

## Claims

1. A fastening for bellows adapted to be fitted between two articulatedly interconnected vehicles and extending as a protection around a bridge between such vehicles, the bellows folds extending in the peripheral direction of the bellows, the bellows being divided lengthwise in its bottom part between two edge zones (1A, 1B), the edge zones overlapping to some extent to close the bellows and being retained in this overlapping position by means of a tensioning cable (4) which co-operates with hook-like and loop-like means (6) of the edge zones, characterised in that the two edge zones (1A, 1B) are identical to the extent that there is associated with each of them a strip (2) which extends around a guide channel (cavity 3) extending in the direction of the division and adapted to receive a respective tensioning cable (4) secured to the bellows end frame, the strip (2) being formed with windows (5) which extend in consecutive and alternate relationship over the length of the edge zones, are open towards the edge and interrupt the guide channel (3), the strip (2) having hooks (6) which are open towards the side remote from the edge, and the two edge zones differ from one another in that the hook-and-window strips of one edge zone are so offset lengthwise of the division from the hook-and-window strips of the other edge zone that the hooks of one edge zone are disposed opposite the windows of the other edge zone and, with the bellows closed, each cable (4) extends through the windows of one edge zone and near every window through a hook of the other edge zone.

2. A fastening according to claim 1, characterised in that the cables (4) are so secured at both their ends to the bellows end frame by securing means that their tension is determined in the same way by the folds of the bellows having a predetermined contour and being at a predetermined spacing from one another.

3. A fastening according to claim 1 and/or 2, characterised in that in the formation of the guide channel (3) by folding over the particular edge zone concerned in order to produce a double-walled edge zone, the windows (5) have a rectangular shape and are formed by the window cut-out being contrived on three of the four sides by parting cuts in the material of the particular strip (2) concerned and by the resulting flap (7) which is thus formed and which is left on the fourth side of the window cut-out being disposed below the hook (6) of the other bellows edge zone.

4. A fastening according to any of claims 1 to 3 characterised in that the hooks have tabs or the like (8) which are sewn to the strip material.

5. A fastening according to any of claims 1 to 4, characterised in that the strips are smooth strips into which the peripheral folds of the bellows run.

**Revendications**

1. Fermeture pour un soufflet destiné au montage entre deux véhicules réunis ensemble par un accouplement articulé, et formant une enveloppe protégeant le passage entre ces deux véhicules, et dont les plis épousent le pourtour de l'ensemble divisé radialement dans sa partie inférieure et formant deux bords (1A, 1B) qui se chevauchent en partie pour fermer le soufflet et sont maintenus dans cette position par un câble (4) qui coopère avec des moyens (6) en forme de crochets et de manilles fermées, **caractérisée par le fait** que les deux bords (1A, 1B) ont la même forme en ce sens que chacun est muni d'une bande (2) qui enveloppe un conduit (creux 3) s'étendant le long du bord et où est logé un câble (4) fixé au cadre en bout du soufflet, et munie sur la longueur des bords des évidements (5) ouverts vers le bord et interrompant le conduit de câble et alternant avec des crochets (6) ouverts du côté ne regardant pas le bord, et que les deux bords ont une forme différente en ce sens que les bandes avec des crochets et évidements de l'un des bords sont décalées vis-à-vis des bandes avec crochets et évidements de l'autre bord de sorte que les crochets de l'un des bords se trouvent en face des évidements de l'autre et qu'à l'état fermé du soufflet, chaque câble passe par les évidements de l'un des bords, et, au niveau de chaque évidement, par un crochet de l'autre bord.

2. Fermeture suivant la revendication 1, **caractérisée par le fait** que les câbles (4) sont fixés avec leurs extrémités par des organes appropriés aux cadres en bout du soufflet de sorte que leur tension est égale et que les plis du soufflet ont un contour et une distance entre eux prédéterminés.

3. Fermeture suivant l'une des revendications 1 et 2 **caractérisée par le fait** que, le conduit de câble,étant formé par un bord replié pour réaliser une zone à double paroi, les évidements (5) ont une forme rectangulaire et sont réalisés par découpage sur trois des quatre côtés dans le matériau de la bande (2) concernée et que l'ailette (7) ainsi formée et solidaire de la bande se trouve sous le crochet (6) de l'autre bord.

4. Fermeture suivant l'une des revendications 1 à 3, **caractérisée par le fait** que les crochets sont munis de languettes (8) fixées sur les bandes.

5. Fermeture suivant l'une des revendications 1 à 4, **caractérisée par le fait** que les bandes sont lisses dans lesquelles se prolongent les plis du soufflet.